# EUROPEAN PATENT APPLICATION

(11) **EP 3 734 529 A1**
(43) Date of publication of application: **04.11.2020**
(21) Application number: 19807301.7
(22) Date of filing: 28.02.2019
(51) Int. Cl.: G06Q 20/02

(54) **DATA PROCESSING METHOD AND DEVICE IN ONLINE PAYMENT PROCESS**

(30) Priority: 22.05.2018 CN 201810495894
(71) Applicant: ADVANCED NEW TECHNOLOGIES CO., LTD., George Town, Grand Cayman KY1-9008 (KY)
(72) Inventor: YANG, Kai, Hangzhou, Zhejiang 311121 (CN); LI, Lihong, Hangzhou, Zhejiang 311121 (CN)
(74) Representative: Goddar, Heinz J.
(86) International application number: PCT/CN2019/076502
(87) International publication number: WO 2019/223388

(57) **Abstract**

Implementations of the present specification provide a method and an apparatus for data processing in an online payment process. According to the method, in an online payment process, a payer first obtains collection information needed for establishing a payment agreement with a payee, and then pays an amount to a collection account only after the payer obtains a payment agreement returned by the payee based on the collection information and the payer acknowledges the collection information in the payment agreement.

## Description

### TECHNICAL FIELD

The present specification relates to the field of data processing technologies, and in particular, to methods and apparatuses for data processing in an online payment process.

### BACKGROUND

With the continuous development of communication technologies, more users have begun to use online payment methods. According to the online payment method, an asset in an online bank account or a third-party electronic payment system account (that is, a payment account) of a payer user can be transferred to an online bank account or a third-party electronic payment system account (that is, a collection account) of a payee user, to achieve a cashless transaction, thereby improving payment convenience.

Therefore, online payment has gradually become an important payment method. A more secure and reliable online payment method needs to be provided.

### SUMMARY

To alleviate a problem in a related technology, one or more implementations of the present specification provide methods and apparatuses for data processing in an online payment process.

According to a first aspect of the implementations of the present specification, a method for data processing in an online payment process is provided, where the method includes: after receiving an online payment request, requesting collection information of a specified item from a payee client device, where the collection information of the specified item is used to establish a payment agreement with a payee user; and after obtaining a payment agreement returned by the payee client device based on the collection information, paying an amount to a collection account if receiving an acknowledgment instruction of a payer user for the collection information.

Further, before the requesting collection information of a specified item from a payee client device, the method further includes: pushing a pop-up window for selecting a collection information item on an operation interface; receiving a selection instruction of the payer user for a collection information item on the pop-up window; and determining the specified item based on the selection instruction.

Further, before the requesting collection information of a specified item from a payee client device, the method further includes: receiving a file uploaded by the payer user, where the specified item is recorded in the file.

Further, the method further includes: sending payment information to the payee client device.

Further, the step of requesting collection information of a specified item from a payee client device includes: generating a payment agreement based on the payment information and the specified item; and sending the payment agreement to the payee client device to request the collection information.

Further, the payment information includes at least any one of the following: identity information of the payer user, a payment method, a payment account, and/or a payment amount.

Further, the step of paying an amount to a collection account includes: requesting a third-party account to transfer a payment asset to the collection account, where the payment asset is an asset that is transferred from a payment account to the third-party account after the online payment request is received.

Further, the step of paying an amount to a collection account includes: requesting a server to unfreeze a payment asset, where the payment asset is an asset that is transferred from a payment account to the collection account and frozen after the online payment request is received.

Further, the collection information includes identity information of the payee user.

Further, the identity information includes at least any one of the following: fingerprint information, signature information, ID card information, passport information, enterprise credit code information, enterprise official stamp information, and/or a video used to acknowledge the identity of the payee user.

Further, the collection information further includes at least any one of the following: payment purpose information, guarantee information, repayment method information, and/or a repayment deadline.

Further, the method further includes: if receiving, before the repayment deadline, information about sending a repayment asset based on the payment amount and the repayment method information, returning repayment acknowledgement information to the payee client device.

Further, the method further includes: if receiving, before the repayment deadline, no information about sending a repayment asset based on the payment amount and the repayment method information, requesting the server to freeze the collection account.

Further, the method further includes: if receiving, before the repayment deadline, no information about sending a repayment asset based on the payment amount and the repayment method information, requesting the server to deduct account credit scores of the collection account.

Further, the method further includes: if receiving, within a predetermined time period, no collection information returned by the payee client device, sending timeout prompt information to the payee client device.

Further, the method further includes: if receiving, within a predetermined time period, no collection information returned by the payee client device, sending a payment asset retrieval request to a third-party account, where the payment asset is an asset that is transferred from a payment account to the third-party account after the online payment request is received.

Further, the method further includes: if receiving, within a predetermined time period, no collection information returned by the payee client device, sending a payment asset retrieval request to a server, where the payment asset is an asset that is transferred from a payment account to the collection account and frozen after the online payment request is received.

Further, before the paying an amount to a collection account, the method further includes: receiving a payment password entered by the payer user; and verifying the payment password.

According to a second aspect of the implementations of the present specification, a method for data processing in an online payment process is provided, where the method includes: receiving a collection information acquisition request sent by a payer client device, where the collection information acquisition request is used to obtain collection information of a specified item, and the collection information of the specified item is used to establish a payment agreement with a payer user; obtaining the corresponding collection information based on the collection information acquisition request, generating a payment agreement based on the collection information, and sending the collection information to the payer client device; and receiving a payment asset, where the payment asset is paid by the payer client device after the payer client device receives an acknowledgment instruction of the payer user for the collection information.

Further, the step of obtaining the corresponding collection information based on the collection information acquisition request includes: reading collection information bound to the collection account; and selecting the corresponding collection information from the collection information based on the collection information acquisition request.

Further, the method further includes: receiving payment information sent by the payer client device.

Further, the payment agreement further includes the payment information.

Further, the payment information includes at least any one of the following: identity information of the payer user, a payment method, a payment account, and/or a payment amount.

Further, the collection information includes identity information of a payee user.

Further, the identity information includes at least any one of the following: fingerprint information, signature information, ID card information, passport information, enterprise credit code information, enterprise official stamp information, and/or a video used to acknowledge the identity of the payee user.

Further, the method further includes: invoking a camera for photographing based on the collection information acquisition request, to obtain an ID card photo, a passport photo, an enterprise credit code certificate photo, an enterprise official stamp photo, and/or the video used to acknowledge the identity of the payee user.

Further, the method further includes: invoking a fingerprint recognition apparatus for fingerprint recognition based on the collection information acquisition request, to obtain the fingerprint information.

Further, the collection information further includes at least any one of the following: payment purpose information, guarantee information, repayment method information, and/or a repayment deadline.

Further, the method further includes: pushing repayment reminder information to the payee user, where the repayment reminder information is used to prompt the payee user to send a repayment asset to the payment account based on the payment amount and the repayment method information before the repayment deadline.

According to a third aspect of the implementations of the present specification, an apparatus for data processing in an online payment process is provided, where the apparatus includes: a first request module, configured to: after an online payment request is received, request collection information of a specified item from a payee client device, where the collection information of the specified item is used to establish a payment agreement with a payee user; and a payment module, configured to: after a payment agreement returned by the payee client device based on the collection information is obtained, pay an amount to a collection account if an acknowledgment instruction of a payer user for the collection information is received.

Further, the apparatus further includes: a display module, configured to push a pop-up window for selecting a collection information item on an operation interface; a second receiving module, configured to receive a selection instruction of the payer user for a collection information item on the pop-up window; and a determining module, configured to determine the specified item based on the selection instruction.

Further, the apparatus further includes a third receiving module, configured to receive a file uploaded by the payer user, where the specified item is recorded in the file.

Further, the apparatus further includes: a first sending module, configured to send payment information to the payee client device.

Further, the first request module includes: an agreement generation unit, configured to generate a payment agreement based on the payment information and the specified item; and a first request unit, configured to send the payment agreement to the payee client device to request the collection information.

Further, the payment information includes at least any one of the following: identity information of the payer user, a payment method, a payment account, and/or a payment amount.

Further, the payment module includes: a second request unit, configured to request a third-party account to transfer a payment asset to the collection account, where the payment asset is an asset that is transferred from a payment account to the third-party account after the online payment request is received.

Further, the payment module includes: a third request unit, configured to request a server to unfreeze a payment asset, where the payment asset is an asset that is transferred from a payment account to the collection account and frozen after the online payment request is received.

Further, the collection information includes identity information of the payee user.

Further, the identity information includes at least any one of the following: fingerprint information, signature information, ID card information, passport information, enterprise credit code information, enterprise official stamp information, and/or a video used to acknowledge the identity of the payee user.

Further, the collection information further includes at least any one of the following: payment purpose information, guarantee information, repayment method information, and/or a repayment deadline.

Further, the apparatus further includes: a return module, configured to: if information about sending a repayment asset based on the payment amount and the repayment method information is received before the repayment deadline, return repayment acknowledgement information to the payee client device.

Further, the apparatus further includes: a second request module, configured to: if no information about sending a repayment asset based on the payment amount and the repayment method information is received before the repayment deadline, request the server to freeze the collection account.

Further, the apparatus further includes: a third request module, configured to: if no repayment asset sent based on the payment amount and the repayment method information is received before the repayment deadline, request the server to deduct account credit scores of the collection account.

Further, the apparatus further includes: a second sending module, configured to: if no collection information returned by the payee client device is received within a predetermined time period, send timeout prompt information to the payee client device.

Further, the apparatus further includes: a third sending module, configured to: if no collection information returned by the payee client device is received within a predetermined time period, send a payment asset retrieval request to a third-party account, where the payment asset is an asset that is transferred from a payment account to the third-party account after the online payment request is received.

Further, the apparatus further includes: a fourth sending module, configured to: if no collection information returned by the payee client device is received within a predetermined time period, send a payment asset retrieval request to a server, where the payment asset is an asset that is transferred from a payment account to the collection account and frozen after the online payment request is received.

Further, the apparatus further includes a fourth receiving module, configured to receive a payment password entered by the payer user; and a verification module, configured to verify the payment password.

According to a fourth aspect of the implementations of the present specification, an apparatus for data processing in an online payment process is provided, where the apparatus includes: a first receiving module, configure to receive a collection information acquisition request sent by a payer client device, where the collection information acquisition request is used to obtain collection information of a specified item, and the collection information of the specified item is used to establish a payment agreement with a payer user; an acquisition module, configured to obtain the corresponding collection information based on the collection information acquisition request, generate a payment agreement based on the collection information, and send the collection information to the payer client device; and a collection module, configured to receive a payment asset, where the payment asset is paid by the payer client device after the payer client device receives an acknowledgment instruction of the payer user for the collection information.

Further, the acquisition module includes: a read unit, configured to read collection information bound to the collection account; and a selection unit, configured to select the corresponding collection information from the collection information based on the collection information acquisition request.

Further, the apparatus further includes: a fifth receiving module, configured to receive payment information sent by the payer client device.

Further, the payment agreement further includes the payment information.

Further, the payment information includes at least any one of the following: identity information of the payer user, a payment method, a payment account, and/or a payment amount.

Further, the collection information includes identity information of a payee user.

Further, the identity information includes at least any one of the following: fingerprint information, signature information, ID card information, passport information, enterprise credit code information, enterprise official stamp information, and/or a video used to acknowledge the identity of the payee user.

Further, the apparatus further includes: a photographing module, configured to invoke a camera for photographing based on the collection information acquisition request, to obtain an ID card photo, a passport photo, an enterprise credit code certificate photo, an enterprise official stamp photo, and/or the video used to acknowledge the identity of the payee user.

Further, the apparatus further includes: a fingerprint recognition module, configured to invoke a fingerprint recognition apparatus for fingerprint recognition based on the collection information acquisition request, to obtain the fingerprint information.

Further, the collection information further includes at least any one of the following: payment purpose information, guarantee information, repayment method information, and/or a repayment deadline.

Further, the apparatus further includes: a reminder module, configured to push repayment reminder information to the payee user, where the repayment reminder information is used to prompt the payee user to send a repayment asset to the payment account based on the payment amount and the repayment method information before the repayment deadline.

According to a fifth aspect of the implementations of the present specification, a computer-readable storage medium is provided, where the computer-readable storage medium stores a computer program, and the method according to any one of the implementations of the present specification is implemented when the program is executed by a processor.

According to a sixth aspect of the implementations of the present specification, a computer device is provided, where the computer device includes a memory, a processor, and a computer program that is stored in the memory and that can run on the processor, and the processor implements the method according to any one of the implementations of the present specification when executing the program.

The technical solutions provided in the implementations of the present specification can achieve the following beneficial effects:

In the implementations of the present specification, in an online payment process, a payer first obtains needed collection information, and then pays an amount to a collection account only after a payee returns the corresponding collection information and the payer acknowledges the collection information. Therefore, security of the online payment process is improved.

It is worthwhile to understand that the previous general description and the following detailed description are merely examples and explanations, and cannot limit the present specification.

### BRIEF DESCRIPTION OF DRAWINGS

The accompanying drawings here are incorporated into the present specification and constitute a part of the present specification, illustrate implementations consistent with the present specification, and serve to explain the principles of the present specification together with the present specification.
FIG. 1 is an architectural diagram illustrating an online payment system, according to an implementation of the present specification;
FIG. 2 is a flowchart illustrating a method for data processing in an online payment process, according to an implementation of the present specification;
FIG. 3(A) to FIG. 3(I) are schematic diagrams of an operation interface in an online payment process, according to an implementation of the present specification;
FIG. 4 is a flowchart illustrating a method for data processing in an online payment process, according to another implementation of the present specification;
FIG. 5 is a schematic structural diagram illustrating an apparatus for data processing in an online payment process, according to an implementation of the present specification;
FIG. 6 is a schematic structural diagram illustrating an apparatus for data processing in an online payment process, according to another implementation of the present specification;
FIG. 7 is a block diagram illustrating a computer device where an apparatus for data processing in an online payment process is located, according to an implementation of the present specification.

### DESCRIPTION OF IMPLEMENTATIONS

Example implementations are described in detail here, and examples of the implementations are presented in the accompanying drawings. When the following description relates to the accompanying drawings, same numbers in different accompanying drawings represent same or similar elements unless specified otherwise. Implementations described in the following example implementations do not represent all implementations consistent with the present specification. On the contrary, the implementations are only examples of apparatus and methods that are described in the appended claims in detail and consistent with some aspects of the present specification.

The terms used in the implementations of the present specification are merely used to describe specific implementations, and are not intended to limit the present specification. The terms "a" and "the" of singular forms used in the implementations of the present specification and the appended claims are also intended to include plural forms, unless otherwise specified in the context clearly. It is worthwhile to further understand that the term "and/or" used in the present specification indicates and includes any or all possible combinations of one or more associated listed items.

It is worthwhile to understand that although terms "first", "second", "third", etc. may be used in the implementations of the present specification to describe various types of information, the information is not limited to these terms. These terms are only used to distinguish between information of the same type. For example, without departing from the scope of the present specification, "first information" can also be referred to as "second information", and similarly, "second information" can also be referred to as "first information". Depending on the context, for example, the word "if" used here can be explained as "while", "when", or "in response to determining".

Online payment is a payment method in which an asset settlement service is performed through a network. In an online payment process, an asset can be transferred from an account to another account. A party that pays an asset is a payer, and an account that pays an asset is a payment account. A party that collects an asset is a payee, and an account that collects an asset is a collection account. An account can include information such as a user name, an account number, and an account balance. An asset can be a national legal currency, such as RMB or dollar, or can be a virtual currency, such as QB, Bitcoin, JingBean, or Tao gold coin.

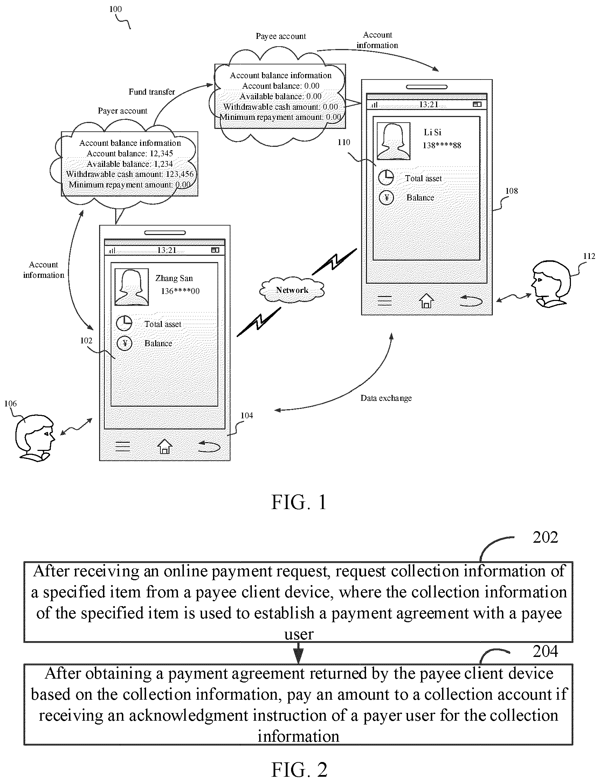

As shown in FIG. 1, an online payment system 100 in an implementation of the present specification can include a payer client device 102 and a payee client device 108. The payer client device 102 and the payee client device 108 each can be an application (APP) that is installed in an intelligent terminal and configured to implement an online payment function, for example, ALIPAY APP, WeChat APP, and online bank APP. FIG. 1 shows an operation interface of the payer client device and an operation interface of the payee client device in this implementation. The operation interface of the payer client device can include information such as a user name (for example, Zhang San), an associated mobile number (for example, 136****00), a total asset, and an account balance of a payer. Likewise, the operation interface of the payee client device can include information such as a user name (for example, Li Si), an associated mobile number (for example, 138****88), a total asset, and an account balance of a payee. Certainly, a client device operation interface in practice is not limited thereto.

As shown in FIG. 1, the payer client device 102 is installed in an intelligent terminal 104, and the payee client device 108 is installed in an intelligent terminal 110. The intelligent terminal can be an electronic device having data processing and communication functions, such as a mobile phone, a tablet computer, or a notebook computer. In an online payment process, the payer client device 102 in the intelligent terminal 104 can directly or indirectly exchange data with the payee client device 108 in the intelligent terminal 110 through a network. For example, the payer client device 102 can send data to a server through a network, and then the server forwards the data to the payee client device 108 through a network. The payer client device 102 can also obtain an asset in a payment account. Through data exchange and asset acquisition, an account fund change can be controlled, reminded, etc. A payer user 106 can operate the intelligent terminal 104 to use the payer client device 102 to perform operations such as starting the payer client device, performing online payment, and logging in to the payment account. The payment account has a certain amount of assets, and the assets can be transferred from the payment account to a collection account, to implement online payment. Likewise, a payee user 112 can operate the intelligent terminal 110 to use the payee client device 108 to perform operations such as starting the payee client device, performing online asset collection, and logging in to the collection account.

The previous system architecture is used as only one architecture that the implementations of the present specification are applicable to, and should not be construed as a limitation on the solutions of the present specification.

As shown in FIG. 2, an implementation of the present specification provides a method for data processing in an online payment process. The method can be performed by the payer client device in the system shown in FIG. 1. The method can include the following step 202 and step 204.

Step 202: After receiving an online payment request, request collection information of a specified item from a payee client device, where the collection information of the specified item is used to establish a payment agreement with a payee user.

Step 204: After obtaining a payment agreement returned by the payee client device based on the collection information, pay an amount to a collection account if receiving an acknowledgment instruction of a payer user for the collection information.

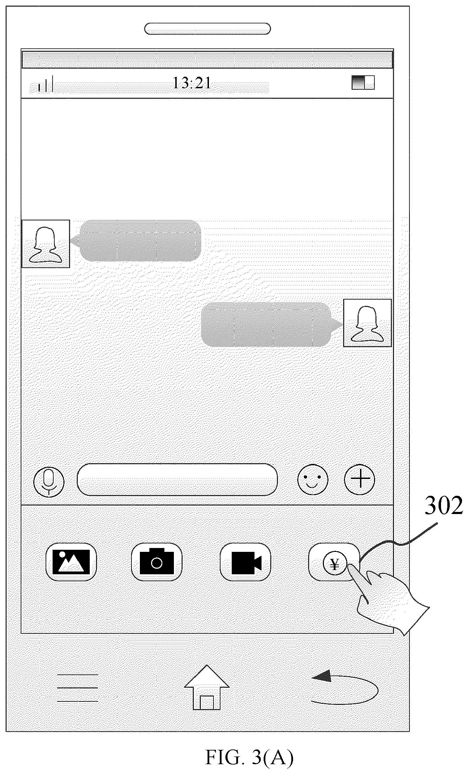

In step 202, the payer client device can receive the online payment request by receiving an operation performed by the payer user on a payment control on the payer client device, or can receive the online payment request by scanning a collection code displayed on the payee client device, or can receive the online payment request by parsing audio information sent by the payer user. Alternatively, the payer client device can display a payment code to the payee client device, and receive the online payment request sent by the payee client device after the payee client device scans the payment code. Both the collection code and the payment code can be QR codes, barcodes, etc. In an implementation, a schematic diagram of receiving an online payment request by using a payment control is shown in FIG. 3(A). When it is detected that the payer user clicks a payment control 302, it indicates that the online payment request is received.

The collection information of the specified item can be used to establish a payment agreement between the payee user and the payer user as an online payment evidence. The specified item can be determined based on a need of the payer user. In different cases, the payer user may need collection information of different items. For example, when the payee user is an enterprise user, the collection information needed by the payer user may be related to enterprise information. For another example, in some cases, one or more types of collection information may become invalid, and in this case, the payer user can request the payee user to provide collection information of other items. The collection information is specified based on actual needs, to adapt to different application scenarios, thereby improving solution flexibility.

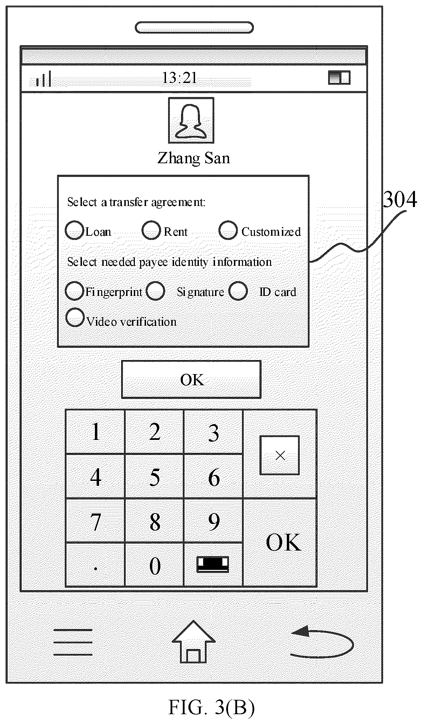

In an implementation, after the online payment request is received, a pop-up window for selecting a collection information item can be pushed on an operation interface of the payer client device, a selection instruction of the payer user for a collection information item on the pop-up window can be received, and the specified item can be determined based on the selection instruction. As shown in FIG. 3(B), after the online payment request is received, a pop-up window 304 can be pushed on the operation interface of the payer client device. The pop-up window 304 can include a transfer agreement item, used to represent an online payment purpose, and can further include needed payee identity information. The transfer agreement item can further include multiple options such as a loan option, a rent option, and a customized option (used by the user to enter content). The identity information item can include a fingerprint option, a signature option, an ID card option, a video verification option, etc. In this implementation, the pop-up window for selecting an item is directly pushed to the payer user, so that the user does not need to manually enter a needed collection information item, thereby reducing operation complexity and improving user experience.

In another implementation, after the online payment request is received, a file uploaded by the payer user can be received, where the specified item is recorded in the file. In this implementation, the user can independently select the needed collection information, so that a user need can be satisfied as far as possible. In addition, the file uploading also facilitates the user in editing content and a format of a collection information option based on user's own preference.

In an implementation, the payer client device can further send payment information to the payee client device. The payment information can be carried in the online payment request, or can be sent before or after the online payment request is sent. The payment information can be used as an evidence for paying an asset by a payer to a payee. The payment information can include one or more of identity information of the payer user, a payment method, a payment account, and/or a payment amount. The identity information of the payer user can include at least any one of the following information: fingerprint information, signature information, ID card information, passport information, enterprise credit code information, enterprise official stamp information, and/or a video used to acknowledge the identity of the payer user. The payment method is a method used by the payer user to pay an asset to the payee user. For example, the payer user pays an asset to the payee user by using a third party such as WeChat or ALIPAY, or pays an asset to the payee user by using an online bank.

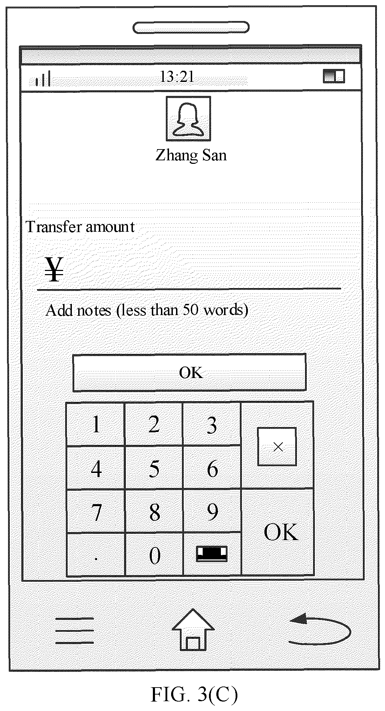

The payment information is sent to the payee client device, so that the payee can acknowledge the payment user. Alternatively, the payment information can be information specified by a user, for example, information specified by the payee user. As shown in FIG. 3(C), after the online payment request is received, a payment interface can be pushed to the payer user, so that the payer user enters payment information such as a payment amount.

In an implementation, the payer client device can generate a payment agreement based on the payment information and the specified item, and send the payment agreement to the payee client device to request the collection information.

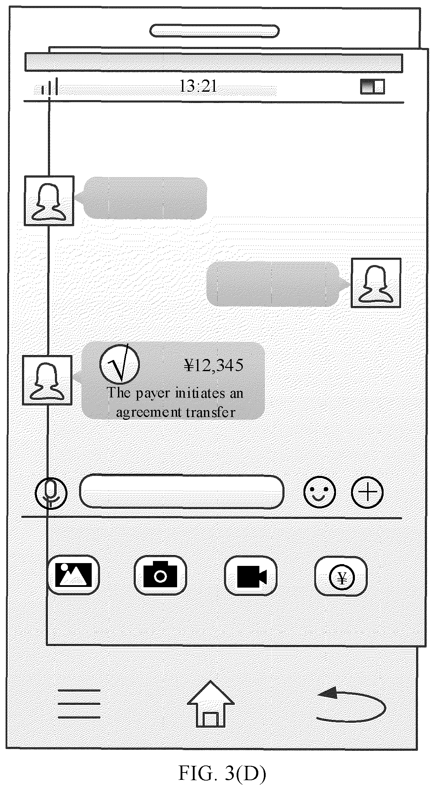

As shown in FIG. 3(D), after the payer client device requests the collection information, a server can generate a payment message based on the request and send the payment message to the payee client device for display. If the payer client device sends a payment amount, the payment message can include the payment amount (for example, "¥12,345" shown in FIG. 3(D)). In addition, the payment message can further include some text information (for example, "The payer initiates an agreement transfer" shown in FIG. 3(D)), to prompt the payee user to provide collection information in time.

In step 204, after the collection information is received, the collection information can be acknowledged by the payer user, and then an asset is paid to the collection account, thereby improving online payment security.

In an implementation, during online payment, the payer can first pay the asset from the payment account to a third-party account, and then the asset is paid from the third-party account to the collection account. Further, when paying the amount to the collection account, the payer client device can request the third-party account to transfer the payment asset to the collection account, where the payment asset is an asset that is transferred from the payment account to the third-party account after the online payment request is received.

In another implementation, during online payment, the payer can first pay the asset from the payment account to the collection account, and the asset is frozen in the collection account until the payer user acknowledges the collection information. Therefore, when paying the amount to the collection account, the payer client device can request the server to unfreeze the payment asset, where the payment asset is an asset that is transferred from the payment account to the collection account and frozen after the online payment request is received.

In either of the previous payment methods, the asset paid from the payment account can be successfully paid to the collection account only after the payer user acknowledges the collection information, thereby improving online transaction security.

In any one of the previous implementations, the collection information can include identity information of the payee user. Specifically, the identity information can include one or more of fingerprint information, signature information, ID card information, passport information, enterprise credit code information, enterprise official stamp information, and/or a video used to acknowledge the identity of the payee user. Further, the collection information can further include at least any one of the following: payment purpose information (used to represent an online payment purpose and use), guarantee information (which can be account credit scores, identity information of a guarantor, etc.), repayment method information (for example, installment or one-off repayment, online payment or offline payment, etc.), and/or a repayment deadline.

In some implementations, if the payer client device sends the payment amount to the payee client device, and the payee client device sends the repayment method information and the repayment deadline to the payer client device, if the payer client device receives, before the repayment deadline, information about sending a repayment asset based on the payment amount and the repayment method information, the payer client device can return repayment acknowledgement information to the payee client device. The repayment acknowledgement information can be used as an evidence for receiving, by the payer, an amount repaid by the payee. On the contrary, if the payer client device receives, before the repayment deadline, no repayment asset sent based on the payment amount and the repayment method information, the payer client device can request the server to freeze the collection account, or request the server to deduct account credit scores of the collection account.

In an implementation, if the payer client device receives, within a predetermined time period, no collection information returned by the payee client device, the payer client device can send timeout prompt information to the payee client device. The predetermined time period can be one hour, three days, etc. The timeout prompt information is sent to the payee client device, so that the payee user can be reminded to provide the collection information in time, to avoid delaying a transaction.

In an implementation, a deadline for returning the collection information by the payee can be further sent when the collection information of the specified item is requested from the payee client device. After the online payment request is received, if the payment asset is paid from the payment account to the third-party account, but no collection information sent by the payee client device is received within the specified time, a payment asset retrieval request can be sent to the third-party account, where the payment asset is an asset that is transferred from the payment account to the third-party account after the online payment request is received.

After the online payment request is received, if the payment asset is paid from the payment account to the collection account and the asset in the collection account is frozen, but no collection information sent by the payee client device is received within the specified time, a payment asset retrieval request can be sent to the server, where the payment asset is an asset that is transferred from the payment account to the collection account and frozen after the online payment request is received.

In either of the previous asset retrieval methods, the paid asset can be retrieved when the payee fails to return the collection information in time. When the asset is paid to a wrong collection account, fund safety of the payer can be guaranteed through asset retrieval.

In an implementation, before the amount is paid to the collection account, a payment password entered by the payer user can be received and the payment password can be verified. The amount is paid to the collection account only after the verification on the payment password succeeds, which reduces the risk that others use the payment account for online payment, thereby further improving online payment security.

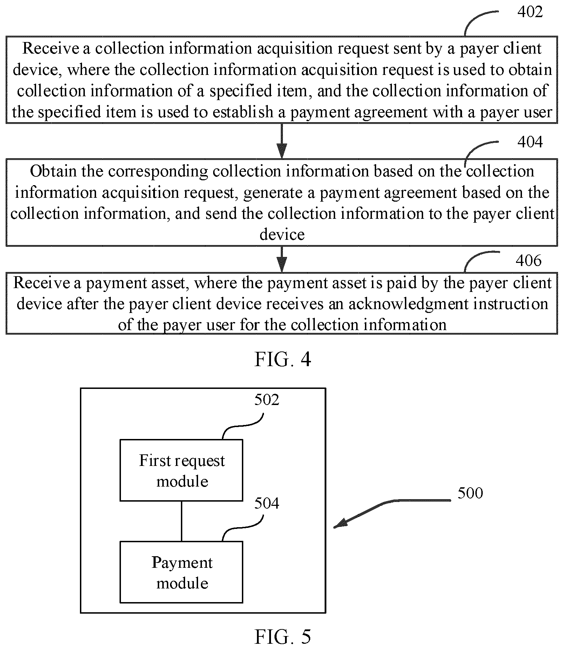

As shown in FIG. 4, an implementation of the present specification provides a method for data processing in an online payment process. The method can be performed by the payee client device in the system shown in FIG. 1. The method can include the following step 402 to step 406.

Step 402: Receive a collection information acquisition request sent by a payer client device, where the collection information acquisition request is used to obtain collection information of a specified item, and the collection information of the specified item is used to establish a payment agreement with a payer user.

Step 404: Obtain the corresponding collection information based on the collection information acquisition request, generate a payment agreement based on the collection information, and send the collection information to the payer client device.

Step 406: Receive a payment asset, where the payment asset is paid by the payer client device after the payer client device receives an acknowledgment instruction of the payer user for the collection information.

In an implementation, the collection information can be bound to a collection account. Therefore, when obtaining the collection information, the payee client device can read collection information bound to the collection account, and then select the corresponding collection information from the collection information based on the collection information acquisition request sent by the payer client device. Further, if the collection information bound to the collection account does not include the collection information requested by the payee client device, the payee client device can obtain the needed collection information by using another method. For example, the payee client device can read the collection information from an intelligent terminal, or the payee client device can invoke a corresponding apparatus to obtain the collection information, or the payee client device can request the user to enter the collection information, or the payee client device can receive a file including the collection information.

In an implementation, the payee client device can further receive payment information sent by the payer client device. Further, the payment agreement can further include the payment information. Optionally, the payment information can include at least any one of the following: identity information of the payer user, a payment method, a payment account, and/or a payment amount.

In any one of the previous implementations, the collection information can include identity information of a payee user. Specifically, the identity information can include one or more of fingerprint information, signature information, ID card information, passport information, enterprise credit code information, enterprise official stamp information, and/or a video used to acknowledge the identity of the payee user.

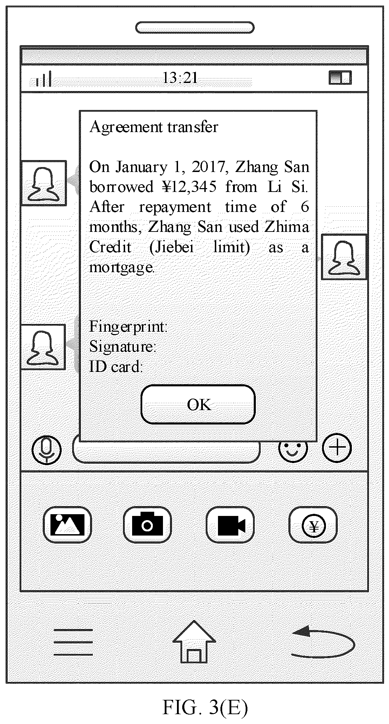

In an implementation, after receiving a payment message, the payee user can further click the payment message to view payment information and needed collection information. As shown in FIG. 3(E), the payment message includes payment time information (January 1, 2017), a payer (Zhang San), a payee (Li Si), a payment amount (¥12,345), repayment time (6 months), and guarantee information (Zhima Credit (Jiebei limit)). The payment message further includes collection information items (fingerprint, signature, and ID card) needed by the payer.

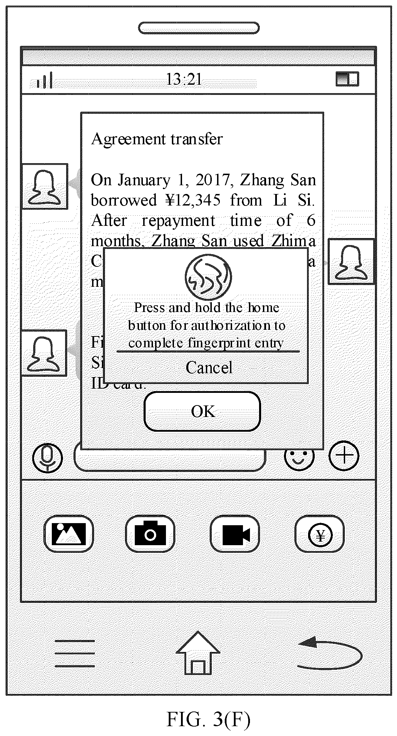

If the collection information includes the fingerprint information, the payee client device can invoke a fingerprint recognition apparatus for fingerprint recognition based on the collection information acquisition request, to obtain the fingerprint information. As shown in FIG. 3(F), the payee client device can send a fingerprint acquisition prompt to the payee user to obtain a fingerprint of the payee user, and the payer user can press and hold the home button to complete fingerprint entry.

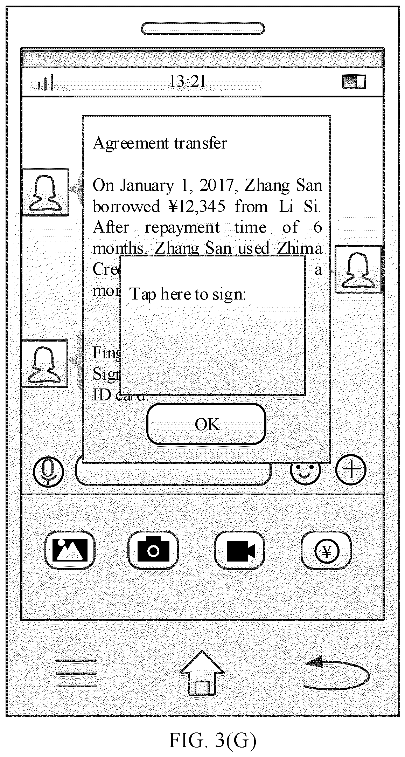

As shown in FIG. 3(G), if the collection information includes the signature information, the payee client device can send a signature acquisition prompt to the payee user to obtain a signature of the payee user, and the payee user can handwrite a signature on an operation interface of the client device to complete signature entry.

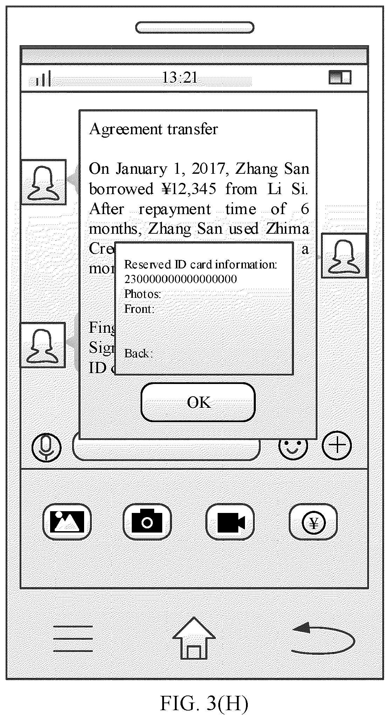

If the collection information includes a photo or a video, the payee client device can invoke a camera for photographing based on the collection information acquisition request, to obtain an ID card photo, a passport photo, an enterprise credit code certificate photo, an enterprise official stamp photo, and/or the video used to acknowledge the identity of the payee user. The camera can be a built-in camera or an external camera. As shown in FIG. 3(H), the payee client device can send an ID card photo acquisition prompt to the user, to obtain front and back ID card photos. If the account of the payee user has been bound to an ID card number, the user can be further prompted to enter an ID card photo that matches the bound ID card number.

In an implementation, the collection information can further include at least any one of the following: payment purpose information, guarantee information, repayment method information, and/or a repayment deadline. Further, the payee client device can further push repayment reminder information to the payee user, where the repayment reminder information is used to prompt the payee user to send a repayment asset to the payment account based on the payment amount and the repayment method information before the repayment deadline.

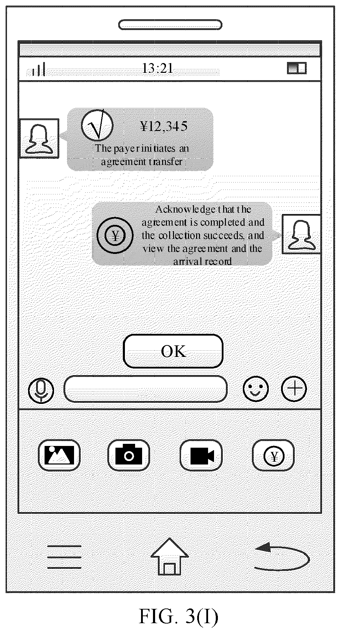

After the collection information is sent to the payer client device, a collection message can be further sent to the payer client device to notify that the payee has received the asset. In addition, the payee user can click to view an agreement and a receiving record. As shown in FIG. 3(I), the payment message includes text information "Acknowledge that the agreement is completed and the collection succeeds, and view the agreement and the receiving record".

An overall process of a method for data processing in an online payment process in an implementation of the present specification is as follows:
Step 1: A payer initiates an "agreement" transfer.
Step 2: The payer selects an agreement method, such as loan.
Step 3: The payer selects collection information that a payee needs to provide as an evidence, such as a fingerprint or an ID card number (including a mortgage guarantee, for example, a Yu'E Bao balance guarantee).
Step 4: After the agreement selection, the payer enters a payment amount and password to pay an amount to the payee.
Step 5: The payer receives an "agreement" payment prompt from the payee.
Step 6: The payee clicks an agreement transfer dialog box to view agreement content.
Step 7: The payee provides the collection information such as the fingerprint or the ID card as needed by the payer, and acknowledges the agreement.
Step 8: The payee acknowledges that the agreement is completed and the payee receives the amount, and the payer receives a legally valid agreement (such as a promissory note) acknowledged by the payee.

Corresponding to the previous implementations of the method for data processing in the online payment process, the implementations of the present specification further provide implementations of an apparatus for data processing data in an online payment process, a computer storage medium, and a computer device.

FIG. 5 is a block diagram illustrating an apparatus 500 for data processing in an online payment process, according to an example implementation of the present specification. The apparatus includes: a first request module 502, configured to: after an online payment request is received, request collection information of a specified item from a payee client device, where the collection information of the specified item is used to establish a payment agreement with a payee user; and a payment module 504, configured to: after a payment agreement returned by the payee client device based on the collection information is obtained, if an acknowledgment instruction of a payer user for the collection information is received, pay an amount to a collection account.

For a specific implementation process of functions of each module in the apparatus, references can be made to an implementation process of a corresponding step in the previous method performed by the payer client device. Details are omitted here for simplicity.

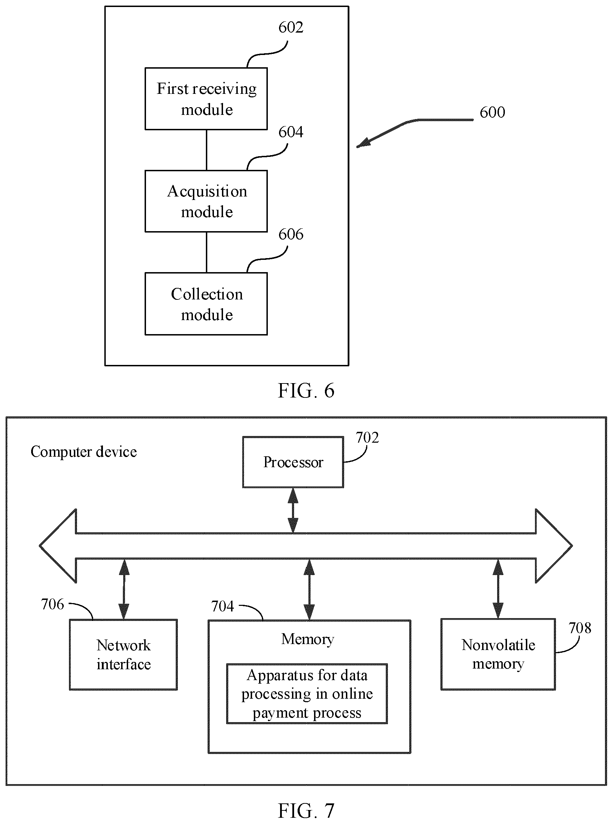

FIG. 6 is a block diagram illustrating another apparatus 600 for data processing in an online payment process, according to an example implementation of the present specification. The apparatus includes: a first receiving module 602, configure to receive a collection information acquisition request sent by a payer client device, where the collection information acquisition request is used to obtain collection information of a specified item, and the collection information of the specified item is used to establish a payment agreement with a payer user; an acquisition module 604, configured to obtain the corresponding collection information based on the collection information acquisition request, generate a payment agreement based on the collection information, and send the collection information to the payer client device; and a collection module 606, configured to receive a payment asset, where the payment asset is paid by the payer client device after the payer client device receives an acknowledgment instruction of the payer user for the collection information.

For a specific implementation process of functions of each module in the apparatus, references can be made to an implementation process of a corresponding step in the previous method performed by the payee client device. Details are omitted here for simplicity.

The implementation of the apparatus for data processing in the online payment process in the present specification is applicable to a computer device, for example, a server or a terminal device. The apparatus implementation can be implemented by software, hardware, or a combination of hardware and software. Software implementation is used as an example. As a logical apparatus, the apparatus is formed by reading a corresponding computer program instruction from a nonvolatile memory to a memory by a processor of the computer device where the apparatus is located. In terms of hardware, FIG. 7 is a structural hardware diagram illustrating a computer device where an apparatus for data processing in an online payment process is located in the present specification. In addition to a processor 702, a memory 704, a network interface 706, and a nonvolatile memory 708 that are shown in FIG. 7, a server or an electronic device where the apparatus is located in the implementation usually can further include other hardware based on actual functions of the computer device. Details are omitted here for simplicity.

Because an apparatus implementation basically corresponds to a method implementation, for related parts, references can be made to some descriptions in the method implementation. The previously described apparatus implementations are merely examples. The modules described as separate parts can or cannot be physically separate, and parts displayed as modules can or does not have to be physical modules, that is, can be located in one position, or can be distributed on a plurality of network modules. Some or all of the modules can be selected based on actual needs to achieve the objectives of the solutions of the present specification. A person of ordinary skill in the art can understand and implement the implementations of the present specification without creative efforts.

Correspondingly, an implementation of the present specification further provides a computer storage medium, where the storage medium stores a program, and the method for data processing in the online payment process in any one of the previous implementations is implemented when the program is executed by a processor.

Correspondingly, an implementation of the present specification further provides a computer device, including a memory, a processor, and a computer program that is stored in the memory and that can run on the processor, where the processor performs the method for data processing in the online payment process in any one of the previous implementations when executing the program.

The present application can use a form of a computer program product implemented on one or more storage media (including but not limited to a magnetic disk memory, a CD-ROM, an optical memory, etc.) that include program code. The computer useable storage medium includes persistent, non-persistent, movable, and unmovable media that can store information by using any method or technology. The information can be a computer-readable instruction, a data structure, a program module, or other data. Examples of the computer storage medium include but are not limited to a phase-change memory (PRAM), a static random access memory (SRAM), a dynamic random access memory (DRAM) or another type of random access memory (RAM), a read-only memory (ROM), an electrically erasable programmable read-only memory (EEPROM), a flash memory, or another memory technology, a compact disc read-only memory (CD-ROM), a digital versatile disc (DVD) or another optical storage, a magnetic cassette, a magnetic tape/magnetic disk memory or another magnetic storage device, or any other non-transmission medium. The computer storage medium can be configured to store information that can be accessed by a computing device.

The payment-related technology carrier in the implementations of the present specification can include, for example, near field communication (NFC), WIFI, 3G/4G/5G, a POS card reader technology, a QR code scanning technology, a barcode scanning technology, Bluetooth, infrared, short message service (SMS), and multimedia message service (MMS).

A person skilled in the art can easily figure out other implementations of the present specification after thinking over the present specification and practicing the present specification disclosed here. The present specification is intended to cover any variations, uses, or adaptations of the present specification, and these variations, uses, or adaptations comply with the general principles of the present specification and include common knowledge or conventional techniques that are not disclosed in the technical field of the present specification. The present specification and the implementations are merely considered as examples, and the actual scope and the spirit of the present specification are pointed out by the following claims.

It is worthwhile to understand that the present specification is not limited to the previously described precise structures shown in the accompanying drawings, and various modifications and changes can be made without departing from the scope of the present specification. The scope of the present specification is limited by the appended claims only.

The previous descriptions are merely preferred implementations of the present specification, but are not intended to limit the present specification. Any modification, equivalent replacement, or improvement made without departing from the spirit and principle of the present specification shall fall within the protection scope of the present specification.

## Claims

1. A method for data processing in an online payment process, wherein the method comprises:
after receiving an online payment request, requesting collection information of a specified item from a payee client device, wherein the collection information of the specified item is used to establish a payment agreement with a payee user; and
after obtaining a payment agreement returned by the payee client device based on the collection information, paying an amount to a collection account if receiving an acknowledgment instruction of a payer user for the collection information.

2. The method according to claim 1, wherein before the requesting collection information of a specified item from a payee client device, the method further comprises:
pushing a pop-up window for selecting a collection information item on an operation interface;
receiving a selection instruction of the payer user for a collection information item on the pop-up window; and
determining the specified item based on the selection instruction.

3. The method according to claim 1, wherein before the requesting collection information of a specified item from a payee client device, the method further comprises:
receiving a file uploaded by the payer user, wherein the specified item is recorded in the file.

4. The method according to claim 1, wherein the method further comprises:
sending payment information to the payee client device.

5. The method according to claim 4, wherein the step of requesting collection information of a specified item from a payee client device comprises:
generating a payment agreement based on the payment information and the specified item; and
sending the payment agreement to the payee client device to request the collection information.

6. The method according to claim 4, wherein the payment information comprises at least any one of the following: identity information of the payer user, a payment method, a payment account, and/or a payment amount.

7. The method according to claim 1, wherein the step of paying an amount to a collection account comprises:
requesting a third-party account to transfer a payment asset to the collection account, wherein the payment asset is an asset that is transferred from a payment account to the third-party account after the online payment request is received.

8. The method according to claim 1, wherein the step of paying an amount to a collection account comprises:
requesting a server to unfreeze a payment asset, wherein the payment asset is an asset that is transferred from a payment account to the collection account and frozen after the online payment request is received.

9. The method according to any one of claims 1 to 8, wherein the collection information comprises identity information of the payee user.

10. The method according to claim 9, wherein the identity information comprises at least any one of the following: fingerprint information, signature information, ID card information, passport information, enterprise credit code information, enterprise official stamp information, and/or a video used to acknowledge the identity of the payee user.

11. The method according to claim 10, wherein the collection information further comprises at least any one of the following: payment purpose information, guarantee information, repayment method information, and/or a repayment deadline.

12. The method according to claim 11, wherein the method further comprises:
if receiving, before the repayment deadline, information about sending a repayment asset based on the payment amount and the repayment method information, returning repayment acknowledgement information to the payee client device.

13. The method according to claim 11, wherein the method further comprises:
if receiving, before the repayment deadline, no information about sending a repayment asset based on the payment amount and the repayment method information, requesting the server to freeze the collection account.

14. The method according to claim 11, wherein the method further comprises:
if receiving, before the repayment deadline, no information about sending a repayment asset based on the payment amount and the repayment method information, requesting the server to deduct account credit scores of the collection account.

15. The method according to claim 1, wherein the method further comprises:
if receiving, within a predetermined time period, no collection information returned by the payee client device, sending timeout prompt information to the payee client device.

16. The method according to claim 1, wherein the method further comprises:
if receiving, within a predetermined time period, no collection information returned by the payee client device, sending a payment asset retrieval request to a third-party account, wherein the payment asset is an asset that is transferred from a payment account to the third-party account after the online payment request is received.

17. The method according to claim 1, wherein the method further comprises:
if receiving, within a predetermined time period, no collection information returned by the payee client device, sending a payment asset retrieval request to a server, wherein the payment asset is an asset that is transferred from a payment account to the collection account and frozen after the online payment request is received.

18. The method according to claim 1, wherein before the paying an amount to a collection account, the method further comprises:
receiving a payment password entered by the payer user; and
verifying the payment password.

19. A method for data processing in an online payment process, wherein the method comprises:
receiving a collection information acquisition request sent by a payer client device, wherein the collection information acquisition request is used to obtain collection information of a specified item, and the collection information of the specified item is used to establish a payment agreement with a payer user;
obtaining the corresponding collection information based on the collection information acquisition request, generating a payment agreement based on the collection information, and sending the collection information to the payer client device; and
receiving a payment asset, wherein the payment asset is paid by the payer client device after the payer client device receives an acknowledgment instruction of the payer user for the collection information.

20. The method according to claim 19, wherein the step of obtaining the corresponding collection information based on the collection information acquisition request comprises:
reading collection information bound to the collection account; and
selecting the corresponding collection information from the collection information based on the collection information acquisition request.

21. The method according to claim 20, wherein the method further comprises:
receiving payment information sent by the payer client device.

22. The method according to claim 21, wherein the payment agreement further comprises the payment information.

23. The method according to claim 21, wherein the payment information comprises at least any one of the following: identity information of the payer user, a payment method, a payment account, and/or a payment amount.

24. The method according to any one of claims 19 to 23, wherein the collection information comprises identity information of a payee user.

25. The method according to claim 24, wherein the identity information comprises at least any one of the following: fingerprint information, signature information, ID card information, passport information, enterprise credit code information, enterprise official stamp information, and/or a video used to acknowledge the identity of the payee user.

26. The method according to claim 25, wherein the method further comprises:
invoking a camera for photographing based on the collection information acquisition request, to obtain an ID card photo, a passport photo, an enterprise credit code certificate photo, an enterprise official stamp photo, and/or the video used to acknowledge the identity of the payee user.

27. The method according to claim 25, wherein the method further comprises:
invoking a fingerprint recognition apparatus for fingerprint recognition based on the collection information acquisition request, to obtain the fingerprint information.

28. The method according to claim 25, wherein the collection information further comprises at least any one of the following: payment purpose information, guarantee information, repayment method information, and/or a repayment deadline.

29. The method according to claim 28, wherein the method further comprises:
pushing repayment reminder information to the payee user, wherein the repayment reminder information is used to prompt the payee user to send a repayment asset to the payment account based on the payment amount and the repayment method information before the repayment deadline.

30. An apparatus for data processing in an online payment process, wherein the apparatus comprises:
a first request module, configured to: after an online payment request is received, request collection information of a specified item from a payee client device, wherein the collection information of the specified item is used to establish a payment agreement with a payee user; and
a payment module, configured to: after a payment agreement returned by the payee client device based on the collection information is obtained, pay an amount to a collection account if an acknowledgment instruction of a payer user for the collection information is received.

31. An apparatus for data processing in an online payment process, wherein the apparatus comprises:
a first receiving module, configure to receive a collection information acquisition request sent by a payer client device, wherein the collection information acquisition request is used to obtain collection information of a specified item, and the collection information of the specified item is used to establish a payment agreement with a payer user;
an acquisition module, configured to obtain the corresponding collection information based on the collection information acquisition request, generate a payment agreement based on the collection information, and send the collection information to the payer client device; and
a collection module, configured to receive a payment asset, wherein the payment asset is paid by the payer client device after the payer client device receives an acknowledgment instruction of the payer user for the collection information.

32. A computer-readable storage medium, wherein the computer-readable storage medium stores a computer program, and the method according to any one of claims 1 to 29 is implemented when the program is executed by a processor.

33. A computer device, comprising a memory, a processor, and a computer program that is stored in the memory and that can run on the processor, wherein the processor implements the method according to any one of claims 1 to 29 when executing the program.
